(19) Europäisches Patentamt
European Patent Office
Office européen des brevets

(11) **EP 3 123 165 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
***G01N 30/54*** *(2006.01)*     ***G01N 30/60*** *(2006.01)*
***G01N 30/30*** *(2006.01)*

(21) Anmeldenummer: **15717079.6**

(22) Anmeldetag: **23.03.2015**

(86) Internationale Anmeldenummer:
**PCT/DE2015/000131**

(87) Internationale Veröffentlichungsnummer:
**WO 2015/144117 (01.10.2015 Gazette 2015/39)**

(54) **STRÖMUNGSFELD INDUZIERTE TEMPERATUR-GRADIENTEN-GASCHROMATOGRAPHIE**

FLOW-FIELD-INDUCED TEMPERATURE GRADIENT GAS CHROMATOGRAPHY

CHROMATOGRAPHIE EN PHASE GAZEUSE À GRADIENT DE TEMPÉRATURE INDUIT PAR LE CHAMP D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2014 DE 102014004286**

(43) Veröffentlichungstag der Anmeldung:
**01.02.2017 Patentblatt 2017/05**

(73) Patentinhaber: **Boeker, Peter**
**53225 Bonn (DE)**

(72) Erfinder: **Boeker, Peter**
**53225 Bonn (DE)**

(74) Vertreter: **Sparing, Rolf Klaus et al**
**Bonnekamp & Sparing**
**Patentanwaltskanzlei,**
**European Patent & Trade Mark Law Firm,**
**Goltsteinstrasse 19**
**40211 Düsseldorf (DE)**

(56) Entgegenhaltungen:
**EP-A2- 0 375 410**     **WO-A1-97/14957**

- **JESSE A. CONTRERAS ET AL: "Peak sweeping and gating using thermal gradient gas chromatography", JOURNAL OF CHROMATOGRAPHY A, Bd. 1278, 1. Februar 2013 (2013-02-01), Seiten 160-165, XP055200232, ISSN: 0021-9673, DOI: 10.1016/j.chroma.2013.01.010**
- **CONTRERAS JESSE A ET AL: "Dynamic thermal gradient gas chromatography", JOURNAL OF CHROMATOGRAPHY, Bd. 1302, 14. Juni 2013 (2013-06-14), Seiten 143-151, XP028676624, ISSN: 0021-9673, DOI: 10.1016/J.CHROMA.2013.06.008**

**Beschreibung**

Die Erfindung betrifft ein Verfahren und eine Vorrichtung zur gaschromatographischen Trennung und Bestimmung von flüchtigen Stoffen in einem Trägergas über eine chromatographische Trennkapillare, wobei die Trennkapillare und/oder eine die Trennkapillare umgebende Hüllkapillare elektrisch leitend ist und mit Strom in Form einer Widerstandsheizung erwärmt und durch eine erzwungene konvektive Strömung mittels eines Fluids gekühlt wird.

Das Verfahren der Gaschromatographie (GC) wird heute bei konstanten Temperaturen in Form einer isothermen GC oder mit einer Erhöhung der Temperatur während des Durchlaufens der zu trennenden Substanzen durch die Chromatographiesäule in Form einer temperaturprogrammierten GC durchgeführt. In Laborsystemen der GC wird die Chromatographiesäule in einem Ofenraum mit möglichst geringen Temperaturgradienten gleichmäßig geheizt (Luftbad-Ofen). Durch das Luftbad kann die Säule schnell geheizt werden, wobei Temperaturanstiege bis zu 100°C/min bei kommerziellen Systemen möglich sind.

Die GC beruht auf dem Verteilungsgleichgewicht zwischen der mobilen Phase, d.h. dem Trägergas und der stationären Phase, die sich bei Kapillarsäulen als dünner Film an der Kapillarwand befindet. Die Transportgeschwindigkeit von Stoffen in der Säule beruht nur zu geringem Teil auf der Geschwindigkeit, d.h. dem Fluss der mobilen Phase. Vor allem das temperaturabhängige Phasengleichgewicht der Stoffe zwischen stationärer und mobiler Phase bestimmt die Transportgeschwindigkeit. Bei der isothermen GC werden nur Substanzen in einem engen Phasengleichgewichtsbereich getrennt. Die Signale der bei zu tiefen Temperaturen langsam transportierten Substanzen werden durch die langen Transportzeiten und die dabei stattfindende Diffusion sehr breit. Manche Substanzen werden nicht transportiert und verbleiben am Beginn der Trennsäule. Die temperaturprogrammierte GC (TPGC) wird so ausgeführt, dass für alle Substanzen ein Temperaturniveau eingestellt wird, bei dem der Transport durch die Säule erfolgt.

Bei geeigneter Abstimmung der Trägergasgeschwindigkeit und der Aufheizrate der Trennsäule werden über einen breiten Phasengleichgewichtsbereich gute Trennungen erreicht. Ein Nachteil dieser Methode ist, dass die Substanzen während des Aufheizens noch in der Säule transportiert werden und daher höhere Temperaturen erfahren, als für eine Stofftrennung und den Transport erforderlich sind. Dieser Effekt ist besonders bei schnellen GC Trennungen relevant, bei denen hohe Heizraten angewendet werden. Durch ein zu schnelles Anheben der Temperatur wird zugleich die Trenneffizienz vermindert, da die Substanzen nur in kleinen Zeitfenstern und damit kurzen Säulenabschnitten die zur Trennung günstigen Temperaturen erfahren. Danach erfolgt nur noch ein reiner Transport im Restabschnitt der Trennsäule, da die Temperaturen dann zu hoch für Trennprozesse sind.

Die Gaschromatographie mit Temperaturgradient (TGGC) entlang der Trennsäule geht auf eine Idee des russischen Wissenschaftlers Zhukhovitskii zurück. Wenn jede Substanz eine für sie charakteristische Temperatur besitzt, ab der der Transport mit nennenswerter Geschwindigkeit erfolgt (oft als Lauftemperatur bezeichnet), so führt ein vom Eingang (hohe Temperatur) zum Ausgang (niedrige Temperatur) verlaufender Gradient beim Einströmen eines Stoffgemisches dazu, dass sich jede der Substanzen an derjenigen Temperatur (und damit dem Ort) ansammelt, an dem die Lauftemperatur wieder unterschritten wird. In der ersten Phase der TGGC arbeitet die Trennsäule als Sammel- oder Anreicherungssystem. Wird nun das Temperaturniveau bei weiter bestehendem Gradienten angehoben, so wandert jede Substanz räumlich weiter zum Ausgang, da die Lauftemperatur immer weiter in diese Richtung wandert. Ist die Temperatur am Ausgang genau gleich der Lauftemperatur, so tritt die Substanz aus der Säule und wird zum Detektor geführt.

Der Unterschied zur TPGC ist, dass jede Substanz nur genau die Temperatur erfährt, die ihrer Lauftemperatur entspricht und nicht in hohen Temperaturzonen lediglich weiter transportiert wird. Die Temperatur, bei der eine Substanz am Ausgang der Trennsäule austritt, ist daher bei der TGGC systematisch niedriger, als bei der TPGC.

Ein zentraler Effekt und Vorzug der TGGC ist außerdem der Fokussierungseffekt. Da um jede Substanz ein Temperaturgradient besteht, werden Substanzanteile, die etwas vor die Hauptzone geeilt sind, durch das dort herrschende niedrigere Temperaturniveau gebremst. Die weiter zurückliegenden Anteile werden durch die etwas höhere Temperatur aber schneller transportiert. Der Effekt der Diffusionsverbreiterung (longitudinale Diffusion) beim Transport in der Kapillare wird damit kompensiert. Durch die schmalen Substanzsignale ist deren Höhe vergrößert und damit die Messempfindlichkeit und das Signal/Rausch-Verhältnis verbessert.

Trotz der theoretischen Vorzüge der TGGC ist das Konzept nicht in die breitere kommerzielle Anwendung gekommen. Die ursprüngliche Umsetzung der Idee von Zhukhovitskii erfolgte in kurzen gepackten Trennsäulen, um die ein bewegliches Ofensegment angeordnet war, das mechanisch vom Eingang zum Ausgang der Trennsäulen bewegt wurde und den Gradienten innerhalb des Ofenabschnittes erzeugte. Teilweise wurde die Trennsäule bzw. Trennkapillare kreisförmig ausgeführt und der Ofen im Kreis herumgefahren. Das ursprüngliche Temperaturgradienten -Verfahren mit bewegtem Ofen an gepackten Säulen wurde auch als Chromathermographie bezeichnet. Die aufkommende Kapillar-Gaschromatographie mit dünnen Quarzglas-Trennsäulen bzw. Quarzglas-Trennkapillaren hatte eine hohe Effizienz auch bei isothermen und besonders bei temperaturprogrammierten Anwendungen gezeigt. Die technische Entwicklung hatte die Optimierung der Luftbad-Gaschromatographen bezüglich Heizraten und Temperaturhomogenität im Mittelpunkt. Auch technisch musste die Übertragung des Konzepts der Chromathermographie von kurzen, starren, gepackten Säulen auf dünne und flexible Trennkapillaren mit vielen Metern Länge als schwer lösbar angesehen werden. Zur Handhabung der mit chromathermographischen Verfahren einhergehenden Probleme sind im Stand der Technik einige Lösungen bekannt.

So ist in der US 3,146,616 beschrieben, dass anstelle eines mechanisch bewegten Ofens im chromathermographischen Verfahren eine elektrische Heizanordnung räumlich weitergeschaltet wird, die in einzelnen Windungen einer Heizwicklung jeweils die erforderliche Heizleistung auf die Trennsäule liefert.

In der DE 21 495 08 ist eine einfache konzentrische Anordnung einer Heizanordnung um eine Trennsäule offenbart, durch die im Gegenstrom ein kaltes Fluid fließt, das sich auf dem Weg erwärmt und so einen Temperaturgradienten in der Trennsäule erzeugt. Zur Freisetzung der gesammelten Stoffe wird im Gleichstrom ein heißes Fluid in den konzentrischen Raum geleitet.

Weiterhin ist in der US 5,028,243 eine mechanisch aufwendige Anordnung zur Erzeugung eines Temperaturgradienten auf einer 2,2 m langen Kapillarsäule beschrieben. Die Säule ist in einer planen Struktur in Form einer Spirale in einen Fluidkanal eingebracht und wird von einer korrespondierenden planen Struktur mit Fluidkanal und Verbindungsöffnungen und einem dort verlaufenden Heizdraht temperiert. Mit der Anordnung können auch sehr tiefe Temperaturen (genannt -100°C) auf die Säule einwirken. Ferner offenbart die Druckschrift eine Anordnung, bei der ein spiralig gewickelter Heizdraht in einem Hüllrohr angeordnet ist, in dessen Zentrum die Trennsäule verläuft. Zusätzlich kann ein Fluid durch die Anordnung geführt werden, z.B. ein sehr kaltes Gas. Der gewünschte Temperaturgradient kann mit einer zweiten Heizspirale mit abnehmendem Wicklungsabstand erzeugt werden.

Ferner ist in der US 5,215,556 eine TGGC-Apparatur mit einer doppelt konzentrischen Umhüllung der Trennkapillare beschrieben. Durch eine erste Umhüllung wird im Gleichstrom zur Trägergasrichtung ein Fluid zum Wärmetausch geführt, in der äußeren Umhüllung im Gegenstrom ein zweites Fluid. Im Ergebnis stellt sich ein linearer Temperaturgradient ein. Die Trennsäule bzw. Trennkapillare wird dabei direkt durch das erste Fluid temperiert.

Die US 5,929,321 beschreibt eine chromathermographische Anordnung mit bewegtem Ofen. Der Ofen wird präzise über die Trennsäule geführt und erzeugt dort örtlich den gewünschten Gradienten. Das Ziel der Erfindung wird vor allem in der Verbesserung der Selektivität bei herkömmlichen Gaschromatographien in Form einer Vortrennung beschrieben.

In der US 7,914,612 B2 ist eine doppelt konzentrische Anordnung mit gewickelter Trennsäule auf einem Halter in einem Rohr offenbart. Die Anordnung soll ca. 10 cm lang sein und eine 1 bis 5 m lange Trennsäule umhüllen. Eingebaut in einen Ofen wird zusätzlich kaltes Fluid zur Erzeugung eines Temperaturgradienten zugeführt.

Aus der US 2012/0085148 (A1) ist ein Zusatzsystem zu einem herkömmlichen Gaschromatographen, das aus einer Schleife einer Metallkapillare besteht, in der eine kurze herkömmliche Quarzglas (‚fused silica') Trennsäule eingebracht ist, bekannt. Ziel der Systementwicklung ist eine temperaturprogrammierte Gaschromatographie mit sehr schnellen Heiz- und Kühlzyklen. Die Anmeldung bezieht sich auf eine Widerstandsheizung, wobei der Gaschromatograph zwar mit einer Widerstandsheizung, jedoch ohne Einsatz eines Temperaturgradienten betrieben wird.

Ebenso beschreibt die US 5,114,439 eine gewickelte Anordnung einer widerstandsbeheizten Kapillarsäule, besonders für mobile Anwendungen. Die Temperatur wird über die Messung des Widerstandes gemessen, wobei aber die Beheizung der Trennkapillare ohne einen Gradienten erfolgt.

In der US 5,135,549 werden vier Techniken zur Erzeugung eines Temperaturgradienten aufgeführt. Dort wird allgemein der Einsatz von Gradienten in bestimmten Konfigurationen beschrieben, wobei die genannten Techniken resistive Heizungen über eine Beschichtung, insbesondere eine. gewickelte Heizung mit variabler Wicklungsdichte eines Heizdrahtes, eine längsgerichtete Kühlmittelströmung entlang einer geheizten Kapillare mit kontinuierlicher Aufwärmung des Kühlmittels und eine separat auf unterschiedliche Temperatur geheizte Trennsäule beschreiben.

In der US 5,808,178 ist eine sogenannte Flash-GC offenbart, wobei eine widerstandsbeheizte Metall-Hüllkapillare in der die GC-Säule geführt ist. In der Patentschrift ist zusätzlich eine Kühlfalle beschrieben, die mit einer Ventilanordnung mit wechselnder Flussrichtung durchströmt wird. Insbesondere ist in der Patentbeschreibung der problematische Einfluss von Temperaturunterschieden zwischen den unteren und den oberen Kapillarwindungen genannt.

Das Realisieren eines gleichmäßigen Temperaturgradienten entlang einer mehrere Meter langen Kapillarsäule ist, wie aus dem Stand der Technik zu ersehen, eine schwierige technische Herausforderung. Die Temperatur muss insbesondere sehr gleichmäßig variieren, auch kurze Abweichungen führen zu Stofftransportverzögerungen (bei Unterschreitung) und damit zu verzerrten Signalformen.

Zwar wurden zur Lösung des technischen Problems auch Trennkapillaren mit Leitlacken in abnehmender Lackstärke überzogen, um über den graduell sich ändernden Widerstand unterschiedlich temperiert zu werden oder der Temperaturgradient wurde mit einer Heizdrahtwicklung direkt um eine metallische Trennsäule bzw. Trennkapillare erzeugt, die in der Wicklungsdichte kontinuierlich zunimmt. Auch wurde versucht, mit einer konzentrisch von einem Führungsrohr umhüllten widerstandsbeheizten Trennsäule zu arbeiten, bei dem kalter Stickstoff im Gegenstrom zur Trägergasrichtung im Führungsrohr geführt wird und die beheizte Trennsäule mit dem noch kalten Fluid am Ausgang stärker gekühlt wird, als mit dem bereits erwärmten Fluid am Ausgang (vgl.PHILLIPS, J. B.; JAIN, V. (1995): On-column temperature programming in gas-chromatography using temperature-gradients along the capillary column. In: JOURNAL OF CHROMATOGRAPHIC SCIENCE 33 (10), S. 541-550; COUDERT, M.; VERGNAUD, J. M. (1971): Retention in gas chromatography obtained with a longitudinal temperature gradient with a constant growth rate. In: JOURNAL OF CHROMATOGRAPHY A 54 (1), S. 1-8. DOI: 10.1016/S0021-9673(01)80238-7; Contreras, Jesse A.; Rockwood, Alan L.; Tolley, H. Dennis; Lee, Milton L. (2013): Peak sweeping and gating using thermal gradient gas chromatography. In: JOURNAL OF CHROMATOGRAPHY A 1278, S. 160-165).

Allen technischen Lösungen haben bislang einen hohen Herstellungsaufwand gemeinsam. Für einen kommerziellen Einsatz sind diese Realisierungen nicht geeignet. So müssen für TGGC-Untersuchungen nach dem Stand der Technik die Trennsäulen manuell modifiziert oder aufwendig auf Träger aufgebracht werden, um sie mit Temperierfluiden räumlich kontrolliert temperieren zu können.

Aufgabe der Erfindung ist es daher, eine TGGC bereit zu stellen, bei der eine effiziente Trennung mit handelsüblichen Trennkapillaren erreicht werden kann, die leicht ausgetauscht werden können, keine speziellen Temperierfluide benötigen, jedoch eine dynamische Temperierung mit Gradient erfolgen kann und nur geringe Energiemengen zur Temperierung zum Einsatz kommen müssen.

Die Aufgabe wird erfindungsgemäß durch die Merkmale der Kennzeichen der unabhängigen Ansprüche 1 und 13 gelöst. Grundlage der Erfindung ist ein Wärmebilanzgleichgewicht direkt am und in der widerstandsbeheizten Trennsäule zwischen der Wärmeproduktion durch die elektrische Verlustleistung und dem Wärmeabtransport durch eine erzwungene Strömung und die Wärmeabstrahlung der Kapillarsäule. Der Temperaturgradient wird durch ein Gradienten-Strömungsfeld erzeugt. Die Trennsäule wird durch unterschiedliche Strömungsgeschwindigkeiten entlang der Trennsäule angeströmt und so das Temperaturgefälle zwischen Eingang und Ausgang der Trennsäule erzeugt.

Der Vorteil gegenüber dem Stand der Technik ist, dass kein thermisches Gradientenfeld um die Trennsäule erzeugt werden muss, das dann die Trennsäule erst mittelbar auf die gewünschten Temperaturen erwärmt oder heizt. Vielmehr entsteht der Temperaturgradient als Folge der sich graduell verändernden Wärmebilanz, so dass ein exaktes und schnell arbeitendes Gaschromatographiesystem aufgebaut werden kann.

Es wird erfindungsgemäß eine elektrisch (resistiv) beheizte Trennkapillare und/oder eine die Trennkapillare umgebende Hüllkapillare anstelle eines nach dem Stand der Technik verwendeten Ofens eingesetzt. Sowohl die elektrisch beheizte Trennkapillare kann kontrolliert mit einem schnellen Temperaturprogramm aufgeheizt werden, während die zu analysierenden Substanzen mit einem Trägergas hindurchgespült werden, als auch im Fall der Verwendung einer die Trennkapillare umgebende Hüllkapillare wobei die eigentliche Quarzglas-Trennkapillare (sogenannte fused silica Kapillare) im Inneren so geführt ist, so dass diese kontrolliert mit einen schnellen Temperaturprogramm aufgeheizt werden kann, während die zu analysierenden Substanzen mit einem Trägergas hindurchgespült werden. Die die Trennkapillare umgebende Hüllkapillare ist erfindungsgemäß aus einem Festkörper hergestellt und kann eine Keramik wie beispielsweise $Si_3N_4$ umfassen. Es ist jedoch auch möglich, dass der Festkörper aus Metall, insbesondere aus Edelstahl besteht. Ferner ist es auch möglich, dass Nickel, Nickellegierungen oder andere Metalle mit passendem Widerstand als Festköper verwendet werden. Beim Einsatz einer elektrisch leitenden Trennkapillare erübrigt sich der Einsatz einer gesonderten Hüllkapillare. Als Heizmethode für die Trennsäulen kommt die Widerstandsbeheizung zum Einsatz, da sie höchste Heizraten und eine hohe Energieffizienz (niedrige thermische Massen) vereinigt. Bei denen im Stand der Technik bis dato verwendeten Widerstandsbeheizungen zur temperaturprogrammierten Gaschromatographie stellt sich ein thermisches Gleichgewicht durch die natürliche Konvektion und den so erfolgenden Wärmetransport ein. Allerdings ist dabei ungünstig, dass die Größe des Wärmetransportes bei natürlicher Konvektion von der Orientierung der beheizten Kapillare im Raum abhängt. Eine waagerechte Kapillare wird mehr von der natürlichen Konvektion gekühlt als eine senkrechte Kapillare, die im oberen Teil durch aufsteigende warme Luftanteile weniger Wärmetransport erfährt. Senkrecht gewickelte Kapillarschleifen weisen daher ungleichmäßige Temperaturen auf.

Ungleich größer als der Wärmetransport durch die natürliche Konvektion ist der Wärmetransport durch die erzwungene Konvektion. Wird eine beheizte Kapillare gezielt angeströmt, so ist der Kühleffekt und damit die stabile Gleichgewichtstemperatur stark von der Strömungsgeschwindigkeit abhängig. Damit ergibt sich die Möglichkeit, durch gezieltes Variieren der Anströmung einer beheizten Kapillare deren Temperatur in weiten Grenzen einzustellen. So ist erfindungsgemäß vorgesehen, dass die Widerstandsbeheizung der Trennkapillare (oder einer Hüllkapillare um die Trennsäule) in einem geeigneten Strömungsfeld erfolgt, das einen gleichmäßigen Strömungsgeschwindigkeitsgradienten entlang der Trennsäule aufweist. Eine TGGC weist dazu eine Einheit zur Erzeugung einer Luftströmung auf, wobei es sich dabei um einen Lüfter oder ein Gebläse handeln kann, aber auch um eine Druckgasversorgung mit einem geeigneten Drosselventil. Der Lüfter oder das Gebläse können von einer elektronischen Steuer- und Regeleinheit ein- und ausgeschaltet werden. Alternativ kann eine Druckgasversorgung beispielsweise über ein Magnetventil ein- und ausgeschaltet werden. Ist zur Durchführung des Verfahrens der TGGC eine erweiterte Regelbarkeit erwünscht, so kann der Lüfter oder das Gebläse elektronisch leistungsgeregelt werden, um einen veränderlichen Volumenstrom zu fördern. Entsprechend kann auch die Druckgasversorgung mit einem Regelventil einen veränderlichen Volumenstrom liefern.

Die TGGC besteht dabei aus einer Trennkapillare, die in einem Strömungsfeld mit Geschwindigkeitsgradienten angebracht ist. Die Herstellung des Geschwindigkeitsgradienten kann auf verschiedene Arten erfolgen, wozu insbesondere die Aufweitung eines Strömungskanales, die kontinuierliche Ableitung von Anteilen der Strömung und eine kontinuierliche Erhöhung des Strömungswiderstandes (Druckverlust) zu nennen sind.

Zur Erzielung eines kontinuierlichen Temperaturfeldes in Form eines Gradienten ist es möglich, eine elektronische Steuer- und Regelungseinheit zu verwenden. Die Einheit steuert und regelt die Temperatur der Trennkapillare bzw. die Temperatur der die Trennkapillare umgebende Hüllkapillare durch Regulierung der angelegten Spannung und damit der erzeugten Verlustleistung. Der Istwert der Steuerung und Regelung wird dabei von einem Temperatursensor geliefert. Es kann sich dabei um ein Thermoelement mit geringer thermischer Masse handeln, das mit einem Hochtemperaturkleber an der Kapillare angebracht wird. Alternativ kann ein infrarotoptischer Temperatursensor eingesetzt werden, der die Temperatur der Kapillare berührungslos misst. Die elektronische Steuer- und Regeleinheit reguliert außerdem die Fluidströmung zur kontrollierten Erzeugung des Strömungsgradienten um die Trennkapillare. Die elektronische Steuer- und Regeleinheit besitzt weitere Anschlüsse, mit denen externe Geräte, wie Probenaufgeber, Thermodesorber oder Laborroboter angesteuert werden oder von solchen externen Geräten Steuerbefehle empfangen werden können. Die elektronische Steuer- und Regeleinheit führt nach einem Startbefehl einen in Phasen unterteilten Messzyklus aus.

Es ist sehr wichtig, diese Temperierung homogen durchzuführen, da es ansonsten zu ungünstigen Verschleppungen der einzelnen Substanzen kommt. Unter homogen ist hier gemeint, dass der Temperaturverlauf über die Länge der Hüllkapillare gleichmäßig ist und keine Zonen mit abwechselnd höherer und niedriger Temperatur auftreten.

Für die beheizte und mit einem Fluid angeströmte Trennkapillare und/oder die die Trennkapillare umgebende Hüllkapillare kann die Wärmebilanz berechnet werden, da hierfür in der wissenschaftlich-technischen Literatur eine ausgearbeitete Theorie verfügbar ist. Die Wärmebilanz setzt sich aus der zugeführten Wärmeenergie, dem konvektiven Abtransport und der abgestrahlten Wärmeenergie zusammen.

$$Q_{Thermoelektrisch} = Q_{Konvektion} + Q_{Abstrahlung}$$

Mit den einzelnen Beiträgen:

$$Q_{Thermoelektrisch} = U * I = I^2 * R = U^2/R$$

$$Q_{Konvektion} = \alpha_{mittel} * A * (T_{Wand} - T_\infty)$$

$$Q_{Abstrahlung} = \sigma_{Boltzmann} * \left(T_{Wand}^4 - T_\infty^4\right)$$

Der aufwendigste Teil der Bilanz ist die Berechnung des Anteils der Konvektion. Der Wärmetransport-Koeffizient wird mit Mitteln der Ähnlichkeitstheorie und den dort definierten dimensionslosen Kenngrößen berechnet.

Man unterscheidet die freie Konvektion und die erzwungene Konvektion. Die freie Konvektion stellt sich durch die Dichteunterschiede ein, die sich beim Erwärmen eines Fluids um einen Körper, wie beispielsweise der Konvektion von Luft um eine beheizte Trennkapillare und/oder die die Trennkapillare umgebende Hüllkapillare, ergeben. Die erzwungene Konvektion liegt in Strömungen vor, die mit Lüftern oder Gebläsen über Druckdifferenzen getrieben werden. Die Strömung ist um den beheizten Körper viel intensiver und daher ist auch die Wärmeableitung höher.

Die Berechnung erfolgt über die dimensionslose Nusselt-Kennzahl. Die Nusselt-Zahl setzt den Wärmeübergang mit der Wärmeleitung im Fluid in Beziehung, zusätzlich verbunden mit einer charakteristischen Länge. Die Leitidee der Ähnlichkeitstheorie mit ihren dimensionslosen Kennzahlen ist es, allgemeingültige Berechnungsgleichungen zu erhalten, die für unterschiedliche Abmessungen oder unterschiedliche Stoffwerte übertragbar sind.

Die Nusselt-Zahl ist definiert als:

$$Nu = \frac{\alpha_m * L}{\lambda_{Fluid}}$$

mit:

$\alpha_m$: mittlerer Wärmeübergangskoeffizient [$W/_{(m2*K)}$]
$\lambda_{Fluid}$: Wärmeleitfähigkeitskoeffizient des Fluids [$W/_{(m*K)}$]
$L$ : charakteristische Länge, hier Durchmesser d [m]

Um die Nusselt-Zahl zu berechnen, werden im Fall der freien Konvektion die Kennzahlen Grashof, Prandtl und Rayleigh benötigt. Für die erzwungene Konvektion kommen die Reynoldszahl und die Prandlzahl zum Ansatz. Es ist typisch für diese Art von Berechnungen, dass Kennzahlen Verwendung finden, die weitere physikalisch charakteristische Verbindungen herstellen. Weiterhin stellt die Grashof-Zahl eine dimensionslose Beziehung zwischen den Auftriebskräften durch Dichteunterschiede im Fluid und der Erdbeschleunigung bei freier Konvektion her.

$$Gr = \frac{L^3 * g * \beta_\infty * (T_{Wand} - T_{Fluid})}{\nu_{Fluid}}$$

mit:

$\beta_\infty$: thermischer Ausdehnungskoeffizient bei $T_{Fluid}[^1/_K]$ $\beta_\infty = \dfrac{1}{T_{Fluid}}$ bei idealen Gasen

$\nu_m$:kinematische Viskosität bei $T_m[^{m2}/_s]$
$g$: Erdbeschleunigung $[^m/_{s2}]$

Die Prandtl-Zahl verbindet Strömungsgrößen mit Wärmeleitungsgrößen im Fluid.

$$Pr = \frac{\eta_{Fluid} * c_p}{\lambda_{Fluid}}$$

mit:

$c_p$: spezifische isobare Wärmekapazität $[^J/_{(kg*K)}]$

$\eta_m$: dynamische Viskosität bei $T_m[^{kg}/_{(m*s)}]$

Für die Temperaturen zwischen 0 und 500°C liegt die Prandtl-Zahl für Luft zwischen 0,71 und 0,72 und kann daher als konstant genommen werden.
In den Berechnungsformeln wird häufig die Rayleigh-Zahl als das Produkt der Grashof- und der Prandtl-Zahl verwendet.

$$Ra = Gr * Pr$$

Für den Fall des Wärmeüberganges des horizontalen Zylinders (Kapillare) bei natürlicher Konvektion wird folgende Berechnungsbeziehung für die Nusselt-Zahl angegeben:

$$Nu_m = \left\{ 0,60 + \frac{0,387 * Ra^{1/6}}{\left[ 1 + \left( 0,559/_{Pr} \right)^{9/16} \right]^{8/27}} \right\}^2$$

Die charakteristische Länge ist hier der Durchmesser der Kapillare. Für die erzwungene Konvektion wird für die Nusselt-Zahl wie folgt angegeben:

$$Nu_m = c \times Re^m \times Pr^n \times \left( \frac{Pr}{Pr_0} \right)^p$$

Mit dem Faktor und den Exponenten in Abhängigkeit der Reynoldszahl[1]:

| Re | c | m | n |
|---|---|---|---|
| 1 bis 40 | 0,76 | 0,4 | 0,37 |
| 40 bis 1000 | 0,52 | 0,5 | 0,37 |
| 1000 bis 2*10^5 | 0,26 | 0,6 | 0,37 |
| 2*10^5 bis 10^7 | 0,023 | 0,8 | 0,4 |
| Heizung des Fluids: p=0,25 Kühlung des Fluids: p=0,20 | | | |
| [1]Baehr, Hans Dieter; Stephan, Karl (2006): Wärme- und Stoffübertragung. 5., neu bearb. Aufl. Berlin [u.a.]: Springer | | | |

Die Reynolds-Zahl berechnet sich:

$$Re = \frac{w_\infty \times d_{Zylinder}}{v_{T_m}}$$

$w_\infty$: Strömunggeschwindigkeit in großer Entfernung vom Zylinder [$m/s$]
$d_{Zylinder}$: charakteristische Länge, hier Durchmesser [m]
$v_m$: kimematische Viskosität bei $T_m$ [$m^2/s$]

In der Gleichung für die Reynoldszahl ist w (unendlich) die Strömungsgeschwindigkeit in großer Entfernung von einem zylindrischen Körper, wie beispielsweise einer geheizten Trennkapillare und/oder einer die Trennkapillare umgebenden Hüllkapillare, d der Durchmesser des zylindrischen Körpers (Kapillare) und $v_m$ die Viskosität bei der mittleren Temperatur.

$Pr_0$ ist die Prandtl-Zahl bei Wandtemperatur. Da die Prandtl-Zahl bei Luft im Bereich zwischen 0 und 300°C bei 0,71 liegt, ist der letzte Faktor der Gleichung ungefähr gleich 1, der vorletzte konstant bei $0,7^{0,37}$ in einem weiten Bereich von Reynolds-Zahlen. Zur Berechnung müssen die Stoffwerte $\lambda_m$ und $v_m$, (evtl. auch $\eta_m$) berechnet werden. Bei diesen Werten besteht eine hohe Temperaturabhängigkeit. Die Berechnungen sind daher auf die Verwendung einer mittleren Temperatur zwischen der (hohen) Wandtemperatur und der (niedrigeren) Fluidtemperatur in größerer Entfernung ausgelegt:

$$T_m = \frac{T_{Wand} + T_\infty}{2}$$

Für die temperaturabhängigen Größen können im Bereich zwischen 0 und 500°C folgende durch Regression erhaltene Gleichungen verwendet werden, bei Einsetzen der absoluten Temperatur in der Einheit Kelvin.

Wärmeleitfähigkeit:

$$\beta = -6,0054*10^{-4} + 1,0732*10^{-4}*T - 7,0019*10^{-8}*T^2 + 3,2779*10^{-11}*T^3 \; [W/(m^2\;K)]$$

Kinematische Viskosität:

$$v = -1,9058*10^{-6} + 2,17926*10^{-8}*T + 1,36208*10^{-10}*T2 - 3,25327*10^{-14}*T3 \; [m^2/s]$$

Zur Präzisierung der voranstehenden Ausführungen sind folgende Berechnungen der Temperaturverläufe bei erzwungener Konvektion mit unterschiedlicher Strömungsgeschwindigkeit wiedergegeben:

Zum Vergleich sind auch die für natürliche Konvektion berechneten Gleichgewichtstemperaturen bei den gleichen Heizleistungen berechnet und angegeben.

| Berechnung für erzwungene Konvektion, Kapillare 1 mm Durchmesser | | | | |
|---|---|---|---|---|
| StrömungsGeschwindigkeit v | Temperatur der Kapillare T | DifferenzTemperatur zu v=0,1 m/s | Temperatur der Kapillare T | DifferenzTemperatur zu v=0,1 m/s |
| m/s | °C | °C | °C | °C |
| Luft von 20°C | für epsilon=1, P=51,29 W/m | | für epsilon=0 P=33,39 W/m | |
| 0,1 | 300,0 | | 300,0 | |
| 0,2 | 262,4 | 37,6 | 234,1 | 65,9 |
| 0,3 | 239,5 | 60,5 | 202,8 | 97,2 |
| 0,4 | 223,3 | 76,7 | 183,5 | 116,5 |
| 0,5 | 210,9 | 89,1 | 169,8 | 130,2 |
| 0,6 | 201,0 | 99,0 | 161,7 | 138,3 |
| 0,7 | 192,8 | 107,2 | 151,4 | 148,6 |
| 0,8 | 185,8 | 114,2 | 144,7 | 155,3 |
| 0,9 | 179,8 | 120,2 | 139,1 | 160,9 |
| 1 | 174,5 | 125,5 | 134,3 | 165,7 |
| 2 | 142,5 | 157,5 | 107,0 | 193,0 |
| 3 | 126,2 | 173,8 | 94,2 | 205,8 |
| 4 | 115,7 | 184,3 | 86,2 | 213,8 |
| 5 | 108,2 | 191,8 | 80,6 | 219,4 |
| Berechnung für natürliche Konvektion | | | | |
| Luft von 20°C | für epsilon=1, P=51,29 W/m | | für epsilon=0 P=33,39 W/m | |
| | 320,0 | | 331,1 | |

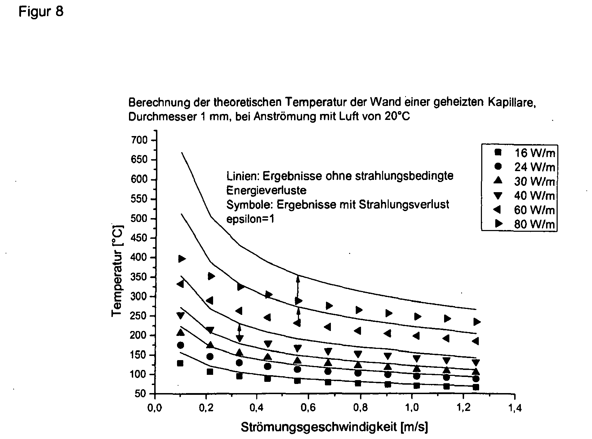

In Figur 8 findet sich eine Darstellung der Berechnungen der Temperaturen bei erzwungener Konvektion mit und ohne Strahlungsanteil (epsilon gleich 1 bzw. 0) dargestellt, wobei die geheizte Kapillare einen Durchmesser von 1 mm aufweist und eine Anströmung mit Luft bei 20°C mit variablen Strömungsgeschwindigkeiten erfolgt.

Es wird im Folgenden beispielhaft die gaschromatographische Messung flüchtiger Stoffe anhand des erfindungsgemäßen Verfahrens bzw. anhand der erfindungsgemäßen Vorrichtung beschrieben:

1. In der Grundstellung sind die Leistungs- und Temperaturregelung und die Volumenstromregelung abgeschaltet. Die Temperaturen der Transferleitungen von der Aufgabeeinheit und zum Detektor sind aber temperiert (typischerweise im Bereich von ca. 200°C). Auch die Transferöfen zum Anschluß der unbeschichteten Transferleitungen an die Trennkapillare sind auf der erforderlichen hohen Temperatur (typisch 300-350°C).

2. Auf einen Steuerbefehl hin wird die Temperaturregelung aktiviert und ein unterer Temperaturregelwert der Trennkapillare und/oder der die Trennkapillare umgebende Hüllkapillare eingestellt. Eine Fluidströmungsregelung wird parallel dazu auf einen festen Fluidstrom eingestellt. Ein typischer unterer Temperaturwert in dieser Phase ist 40°C am Ausgang der Trennkapillare, wobei als Ausgang der Übergangsbereich zum Detektor zu verstehen ist.

3. Ein Steuerbefehl startet eine Messung mit dem TGGC. Die zu analysierende Probe bzw. die zu untersuchenden flüchtigen Stoffe werden nun über ein Trägergas, wie Helium, Wasserstoff, Stickstoff oder Luft in die Trennkapillare eingespült.

4. Nach Injektion der zu analysierenden Stoffe wird von der elektronischen Steuerungs- und Regeleinheit eine vorzugebende Wartezeit ausgeführt. In dieser Wartezeit können z.B. Lösemittelanteile von der Probenaufgabe aus der Trennkapillare ausgespült werden. Diese Wartezeit liegt typischerweise im Bereich weniger Sekunden.

5. Nach dieser Wartezeit beginnt das gesteuerte Anheben der Temperatur der Trennkapillare und/oder der die Trennkapillare umgebende Hüllkapillare. Angezielt werden Zeitintervalle im Bereich weniger Sekunden bis zum einstelligen Minutenbereich. Während des Anhebens werden die zu analysierenden Stoffe mit dem Trägergas und mit dem Gradienten durch die Trennkapillare transportiert. Der Sollwert der Temperatursteuerung kann am Beginn oder am Ende der Trennsäule gemessen werden, je nach dem beabsichtigten chromatographischen Messverfahren. Eine typische Ausführung besteht im rampenförmigen Anheben der Temperatur mit einer bestimmten Steigerungsrate pro Zeiteinheit, z.B. im Bereich von 5 bis 60 °C/s. Der Temperaturbereich von 300°C (z.B. 40°C auf 340°C) wird damit zwischen 5 und 60 s durchfahren. Je nach zu analysierenden Substanzen kann die rampenförmige Steigerung auch in mehreren Abschnitten mit unterschiedlichen Steigerungsraten durchgeführt werden. Auch zwischenzeitliche Haltephasen sind möglich. Während des Anhebens der Temperatur der Trennkapillare und/oder der die Trennkapillare umgebende Hüllkapillare wird der Temperaturgradient über die Länge der Trennkapillare durch den kontinuierlichen Gradienten des Strömungsfeldes hergestellt. Der Fluidstrom kann während der Anhebungsphase konstant bleiben, aber auch angehoben oder abgesenkt werden. Die Höhe des Fluidstromes beeinflusst die Höhe des Gradienten, also die Differenztemperatur zwischen Ein- und Ausgang der Trennkapillare, d.h. den Orten der Injektion und Detektion.

6. Nach dem Erreichen des oberen Steuerungswertes der Temperatursteuerung folgt eine Messphase, bei der diese Temperatur konstant geregelt wird. Begleitend wird der Fluidstrom heruntergeregelt oder ausgeschaltet. Durch das Verringern oder Ausschalten des Strömungsgradienten um die Trennkapillare gleichen sich die Temperaturen zwischen dem Eingang und dem Ausgang der Trennkapillare an. Es herrschen dort nun die Bedingungen einer natürlichen Konvektion mit den zugehörigen Gleichgewichtstemperaturen. Die elektronische Temperaturreglung hält die Temperatur an der Istwert-Messstelle durch Leistungsregelung des Heizstromes konstant. Ist die Istwert-Messstelle am Ausgang der Trennkapillare (niedrige Temperatur bei Strömung), so erfolgt in dieser Phase eine Absenkung der Eingangstemperatur auf das Niveau der Ausgangstemperatur. Ist die Istwert-Messstelle am Eingang der Trennkapillare, so wird die Temperatur am Ausgang auf das Niveau am Eingang ansteigen. Unter Eingang wird erfindungsgemäß der Bereich der Injektion der zu analysierenden flüchtigen Stoffe verstanden. Durch das Anheben der Ausgangstemperatur werden auch schwerflüchtige Stoffe aus der Trennkapillare transportiert.

7. Nach Ende dieser Messphase kann in einer weiteren Phase die Temperatur konstant gehalten werden, um Kontaminationen weiter auszuspülen.

8. In einer letzten Phase wird die Einheit zur Erzeugung einer Luftströmung wie beispielsweise ein Lüfter oder ein Gebläse auf maximale Werte eingestellt. Die Heizleistung der Trennkapillare wird abgestellt. Es kommt daher zu einer sehr schnellen Absenkung der Temperatur auf die Werte, die zum Beginn einer erneuten Messung notwendig sind.

Die Erfindung wird anhand der nachfolgenden Figuren nochmals näher erläutert:

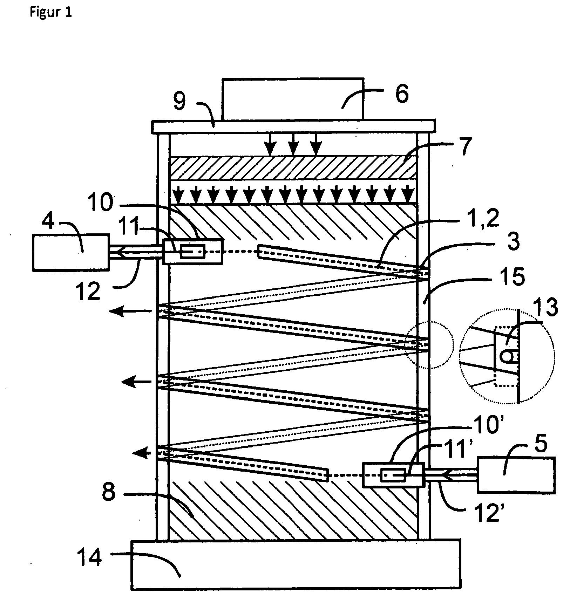

Figur 1 zeigt eine vertikale Schnittzeichnung einer TGGC. Es ist zu erkennen, dass die TGGC durch eine Basis (14), durch einen Deckel (9) und durch seitliche Wandflächen eines Hohlzylinders (15) begrenzt ist. In die Wandung des Hohlzylinders (15) ist eine schraubenförmige Nut (3) eingefräst, in die eine Trennkapillare (1) und/oder eine die Trennkapillare (1) umgebende Hüllkapillare (2) anordbar ist. Die Trennkapillare (1) und/oder die die Trennkapillare (1) umgebende Hüllkapillare (2) kann bei einen Durchmesser von z.B. 20 cm des Hohlzylinders (15) pro Umdrehung eine Nutenlänge bzw. Trennkapillarlänge von 60 cm aufweisen. Im Deckel (9) ist ein Lüfter oder ein Gebläse (6) angebracht, über die ein Fluid, wie z.B. Luft, in den inneren Bereich des Hohlzylinders (15) geblasen wird. Zur Strömungsberuhigung nach dem Lüfter oder Gebläse (6) ist ein Strömungsberuhiger (7) angebracht. Die eingeblasene Luft kann aus der Nut (3) entweichen und führt in der Nut (3) zu einer Luftströmung. Um diese Luftströmung gleichmäßig von oben nach unten zu vermindern, wird ein poröses Material (8) in den Hohlzylinder (15) bzw. in die TGGC eingebracht. Als poröses Material (8) kann erfindungsgemäß ein offenporiger Filterschaum dienen, wobei die beispielhaft genannte Verwendung von offenporigem Filterschaum keine Begrenzung auf einen bestimmten Materialtyp darstellen soll. Es können alle möglichen anderen Materialien verwendet werden, die eine kontrollierbare Druckverminderung ermöglichen, wie beispielsweise Polyurethane, Silikate oder Aramide. So wird ein gleichmäßiger und kontinuierlicher Strömungsverlauf von oben nach unten erzielt, insbesondere in dem Abstieg der Nut (3). Ferner sind im Bereich der Probenaufgabe (5) bzw. des Injektionsorts sowie im Bereich des Detektors (4) nicht beschichtete Transferleitungen (11, 11') zu erkennen, die in beheizten Transferöfen (10, 10') an die Trennkapillare angeschlossen werden, über die die zu analysierenden flüchtigen Stoffe in die TGGC gelangen und nach Messung über den Detektor (4) am Ausgang identifiziert werden.

Begleitheizungen (12, 12') der Transferleitungen stellen den verschleppungsfreien Transport der zu analysierenden Stoffe sicher. Die Trennkapillare (1) und/oder die die Trennkapillare (1) umgebende Hüllkapillare (2) sind an den Innenwandungen der TGGC in bestimmten Winkelabständen durch ein dünnwandiges Halteplättchen (13) gehalten, in dessen Mitte sich ein Führungsloch oder eine Führungsnut befindet.

Die Strömung wird durch diese sehr dünnen Halteplättchen (13) kaum vermindert, nur unmittelbar in den Halteplättchen (13) und in der sich unmittelbar anschließenden Grenzschicht. Durch die fehlende oder verringerte Strömung kommt es nur in einem sehr kleinen Bereich zu einer Erhöhung der Temperatur, da der Kühleffekt der Strömung fehlt oder vermindert ist. Diese leichte lokale Temperaturerhöhung ist für die TGGC nicht störend, da die Stoffe diesen Bereich schnell passieren und danach wieder das Gradientenprofil erfahren. Bevorzugt wird ein Halteplättchen aus einer Verbindung mit geringer Wärmeleitfähigkeit wie z.B. Hochtemperaturpolymere oder Keramiken ausgewählt.

Von einer Probenzuführung (5) kommen die zu analysierenden Stoffe. Es kann sich bei der Probenzuführung (5) um einen gaschromatographischen Injektor, eine Thermodesorptionseinheit oder eine andere Sammel- und Aufgabetechnik handeln. Am kalten Ende der Trennkapillare (1) wird über die Transferleitung (11) der Detektor (4) angeschlossen. Als Detektor (4) kann jeder gaschromatographische Detektor, wie FID, ECD, PID, WLD und auch Massenspektrometer wie Quadrupol-MS oder TOF-MS zum Einsatz kommen. Auch Gassensoren oder Gassensor-Arrays können mit der Vortrennung im TGGC betrieben werden.

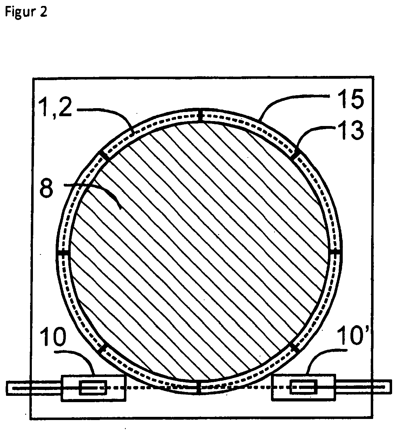

Figur 2 zeigt eine horizontale Schnittzeichnung einer TGGC. Man erkennt den Hohlzylinder (15) in den über eine schraubenförmige Nut (3) eine Trennkapillare (1) eingelegt ist. Über Halteplättchen (13) die im gesamten Umfang des Hohlzylinders (15) angeordnet sind, ist die Trennkapillare (1) in der schraubenförmigen Nut (3) des Hohlzylinders (15) der TGGC befestigt. Poröses, druckminderndes Material (8) befindet sich im Innenbereich der zylindrisch ausgestalteten TGGC, um einen kontinuierlichem Strömungsgradienten zu gewährleisten. Im Eingangs- und Ausgangsbereich der Trennkapillare (1) befinden sich zudem die Transferöfen (10 und 10')

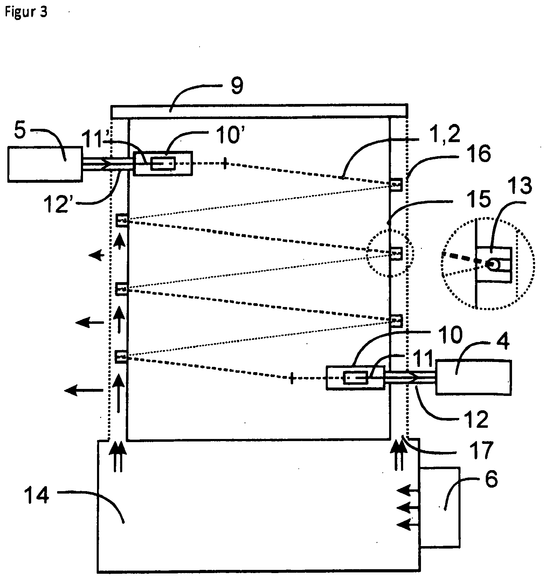

In Figur 3 ist in einer vertikalen Schnittzeichnung eine TGGC mit kontinuierlicher Strömungsableitung über eine teildurchlässige Wandfläche (16), z.B. ein durchlässiges Gewebe oder ein Drahtnetz, dargestellt. Über eine Einheit zur Erzeugung einer Fluidströmung wie beispielsweise ein Lüfter oder ein Gebläse (6), wird seitlich ein Fluid wie beispielsweise Luft in die Basis (14) der TGGC eingeleitet. Über die Basis (14) gelangt das Fluid über eine ringförmige Nut (17) in der Basis (14) in den Mantelbereich zwischen der festen Wand eines Hohlzylinders (15) und einer für das Fluid teildurchlässigen Wandfläche (16). Die Trennkapillare (1) und/oder die die Trennkapillare (1) umgebende Hüllkapillare (2) werden an den Wandung des Hohlzylinders (15) der TGGC in bestimmten Winkelabständen durch dünnwandige Halteplättchen (13) gehalten, in deren Mitte sich ein Führungsloch oder eine Führungsnut befindet. Die Trennkapillare (1) und/oder Hüllkapillare (2) werden schraubenförmig von unten nach oben im Mantelbereich zwischen dem Hohlzylinder (15) und der teildurchlässigen Wandfläche (16) geführt. Über die teildurchlässige Wandfläche (16) bzw. Mantelfläche werden auf dem Weg der Strömung von unten nach oben Teile des Fluids an die Umgebung abgegeben, so dass die Fluidströmung sich kontinuierlich von unten nach oben durch die Ableitung des Fluids verringert. Als Resultat stellt sich ein Strömungsfeld mit von unten nach oben abnehmender Strömungsgeschwindigkeit ein. Das Wärmebilanzgleichgewicht an der beheizten Trennkapillare (1) und/oder Hüllkapillare (2) verschiebt sich daher ebenfalls kontinuierlich, so dass die Temperatur unten bei größerer Strömung niedriger liegt, als oben bei geringerer Strömung. Weiterhin weist die TGGC im Eingangs- und Ausgangsbereich Transferöfen (10, 10') auf, in denen Transferleitungen (11, 11') mit der Trennkapillare verbunden werden, sowie Heizungs- und Isolationselemente (12, 12') zur Temperierung der Transferleitungen auf. Ferner ist im Eingangsbereich der TGGC eine Probeaufgabe (5) bzw. Injektionsstelle und im Ausgangsbereich der TGGC ein Detektor (4) zu erkennen.

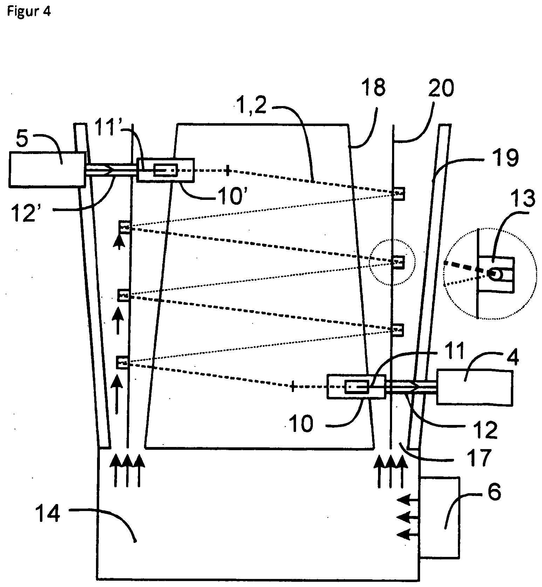

Figur 4 zeigt eine vertikale Schnittzeichnung einer TGGC mit einer kontinuierlichen Vergrößerung des Strömungsquerschnitts. Im Gegensatz zur Figur 3 sind die seitlichen Wandflächen (18 und 19) beide undurchlässig und schräg zur Strömungsrichtung ausgestaltet. Die Wandfläche (18) ist die Wand eines im Innern der Anordnung stehenden Konusteiles. Die Wandfläche (19) ist die Innenwand eines außen befindlichen größeren Konusteiles, der unten einen geringeren Umfang aufweist als oben. Außer der geometrisch konischen Ausführung der Wandflächen (18, 19) sind abweichende Geometrien mit nicht linearen Verlaufsformen möglich. Neben den schrägen Wandflächen (18 und 19) weist die TGGC in dieser Ausführungsform eine Trägerstruktur (20) für die Trennkapillare (1) und /oder Hüllkapillare (2) auf, die die Trennkapillare (1) und/ oder Hüllkapillare (2) im Mittelbereich des sich konisch vergrößernden Strömungskanales führt. Die Trägerstruktur (20) kann aus dünnen Stäben mit den daran befestigten Halteplättchen (13) bestehen, die im Zentrum des Strömungskanals angeordnet sind. Durch die Aufweitung des Strömungsquerschnittes nimmt die Strömungsgeschwindigkeit nach dem Kontinuitätsgesetz ab. Die darin angeordnete beheizte Trennkapillare wird daher mit kontinuierlich von unten nach oben abnehmender Strömungsgeschwindigkeit angeblasen. Das Wärmebilanzgleichgewicht führt daher zu niedrigen Temperaturen unten und zu hohen Temperaturen oben, die in Form eines kontinuierlichen Gradienten über die gesamte Trennkapillare wirken.

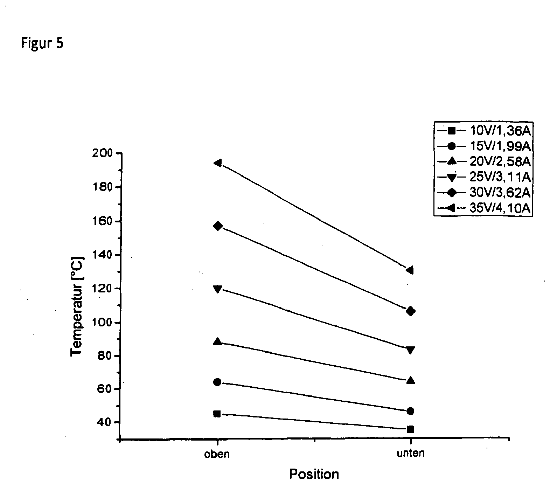

Figur 5 zeigt ein lineares Temperaturprofil einer TGGC ohne zusätzliche Kühlmedien. Die Messungen zeigen ein lineares Temperaturprofil für den Temperaturverlauf der Trennkapillare bei verschiedenen elektrischen Leistungen und konstantem Strömungsfeld. Abweichungen vom linearen Verlauf können jedoch auftreten.

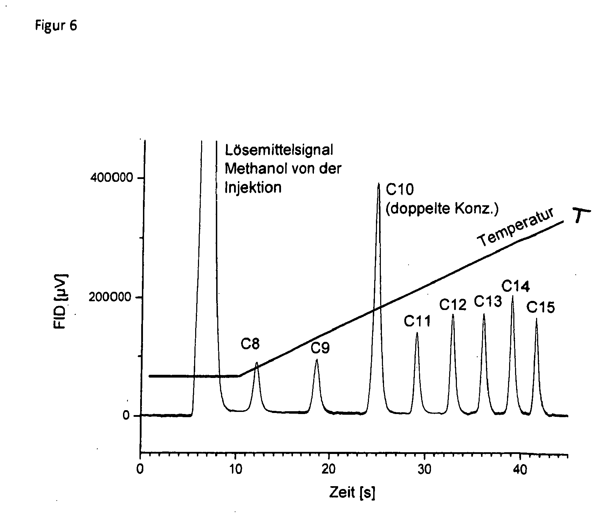

In Figur 6 ist die Stofftrennung einer Mischung von Alkanen der Reihe C8 bis C15 dargestellt. Bei der Messung wurde nach Injektion das Temperaturprofil schnell angehoben. Der Fokussierungseffekt zeigt sich besonders bei den längerkettigen Alkanen, die bei höheren Temperaturen austreten und daher einen etwas steileren Gradienten und damit bessere Fokussierung erfahren.

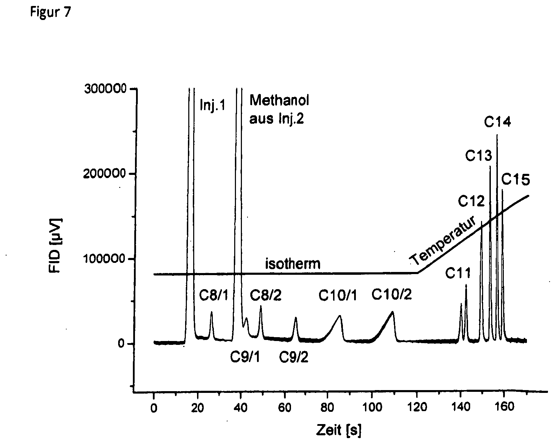

In Figur 7 ist schließlich der Anreicherungseffekt mit einer Zweifachinjektion der Mischung nachgewiesen. Im Abstand von ca. 20 Sekunden wurde eine Alkanmischung injiziert. Üblicherweise treten nun zwei Reihen von Signalen nacheinander auf. Die Messung wurde im ersten Teil bei niedriger Temperatur durchgeführt, hier ist das Auftreten der doppelten Signale der ersten und zweiten Injektion deutlich zu sehen. Die Signalbreiten nehmen von C8 über C9 bis C10 zu, da die späteren Komponenten bereits längere Laufzeiten mit höherer Diffusion erfahren. Die schwerer flüchtigen Substanzen ab C11 sammeln sich auf der Trennsäule und treten während der niedrigen Temperaturen der isothermen Phase nicht aus. Nach dem zweiten Signal der C10 Komponente wurde das Temperaturprofil durch Anheben der Heizspannung schnell angehoben. Die folgenden Substanzen ab C12 sind schon auf gleichen Orten der Trennsäule fokussiert worden und treten als schmale hohe Signale auf. Die Signalbreite ist bei den Gradiententrennungen durch den Fokussierungseffekt deutlich verringert.

**Bezugszeichenliste:**

| | |
|---|---|
| 1 | Trennkapillare |
| 2 | Hüllkapillare |
| 3 | Nut |
| 4 | Detektor |
| 5 | Probenzuführung |
| 6 | Lüfter/Gebläse |
| 7 | Strömungsberuhiger |
| 8 | Material |
| 9 | Deckel |
| 10, 10' | Transferöfen |
| 11, 11' | Transferleitungen |
| 12, 12' | Begleitheizungen |
| 13 | Halteplättchen |
| 14 | Basis |
| 15 | Hohlzylinder |
| 16 | teildurchlässige Wandfläche |
| 17 | Ringnut |
| 18 | Wandfläche (konisch innen) |
| 19 | Wandfläche (konisch aussen) |
| 20 | Trägerstruktur |

**Patentansprüche**

1. Verfahren zur gaschromatischen Trennung und Bestimmung von flüchtigen Stoffen in einem Trägergas über eine chromatographische Trennkapillare (1), wobei die Trennkapillare (1) und/oder eine die Trennkapillare (1) umgebende Hüllkapillare (2) elektrisch leitend ist und mit Strom in Form einer Widerstandsheizung erwärmt und durch eine erzwungene konvektive Strömung mittels eines Fluids gekühlt wird,
**dadurch gekennzeichnet,**
**dass** die Trennkapillare (1) und/oder Hüllkapillare (2) radial angeströmt wird und durch eine kontinuierliche Veränderung der radialen Strömungsgeschwindigkeit des Kühlfluids entlang der Trennkapillare (1) und/oder der Hüllkapillare (2) ein kontinuierlicher Temperaturverlauf in Form eines Gradienten entlang der Trennkapillare (1) und/oder Hüllkapillare (2) erzeugt wird.

2. Verfahren nach Anspruch 1,

**dadurch gekennzeichnet,**
**dass** der Gradient durch kontinuierliche Aufweitung eines Strömungskanales um die Trennkapillare (1) und/oder Hüllkapillare (2) erzeugt wird.

3. Verfahren nach Anspruch 1,
**dadurch gekennzeichnet,**
**dass** der Gradient durch kontinuierliches Ableiten von Strömungsanteilen des Kühlfluids radial entlang der Trennkapillare (1) und/oder der Hüllkapillare (2) über eine teildurchlässige Wand erzeugt wird.

4. Verfahren nach Anspruch 1,
**dadurch gekennzeichnet,**
**dass** der Gradient durch radiale Anströmung eines Kühlfluids entlang der Trennkapillare (1) und/oder Hüllkapillare (2) durch kontinuierliche Vergrößerung des Strömungswiderstandes entlang einer schraubenförmigen Nut (3) in einem Hohlkörper (15) mit einem porösen, druckverlusterzeugenden Material (8) erzeugt wird.

5. Verfahren nach einem der voranstehenden Ansprüche,
**dadurch gekennzeichnet,**
**dass** eine rampenförmige Steigerung des Temperaturverlaufs mit Haltephasen erfolgt.

6. Verfahren nach einem der voranstehenden Ansprüche,
**dadurch gekennzeichnet,**
**dass** die flüchtigen Stoffe in die Trennkapillare (1) geleitet werden, wobei ein Temperaturniveau eingangs der Trennkapillare (1) höher ist als am Ausgang und durch ein zeitgesteuertes Anheben des Temperaturniveaus die eingeleiteten Stoffe die Trennkapillare (1) in Richtung eines Detektors (4) verlassen.

7. Verfahren nach einem der voranstehenden Ansprüche,
**dadurch gekennzeichnet,**
**dass** eine Anreicherung der flüchtigen Stoffe in Zonen der Trennkapillare (1) erfolgt, die auf einem Temperaturniveau liegen, bei denen diese flüchtigen Stoffe nicht oder langsam im Trägergas transportiert werden.

8. Verfahren nach einem der voranstehenden Ansprüche,
**dadurch gekennzeichnet,**
**dass** durch Anheben des Temperaturniveaus die flüchtigen Stoffe entlang der Trennkapillare (1) konzentriert und zeitlich versetzt zum Detektor (4) gelangen.

9. Verfahren nach einem der voranstehenden Ansprüche,
**dadurch gekennzeichnet,**
**dass** das Fluid zur Kühlung der Trennkapillare (1) auf einen Temperaturbereich von 0°C bis -196°C, insbesondere unter Verwendung von Stickstoff, vorgekühlt wird

10. Verfahren nach Anspruch 1 bis 4 und Anspruch 6 bis 9,
**dadurch gekennzeichnet,**
**dass** die Trennung der flüchtigen Stoffe durch kontinuierliche Anhebung des Temperaturniveaus erfolgt.

11. Verfahren nach einem der voranstehenden Ansprüche,
**dadurch gekennzeichnet,**
**dass** die Trennung der flüchtigen Stoffe zum Einsatz in der Drogen- und Dopinganalytik oder in der Explosivstoff- und Gefahrstoff-Detektion erfolgt.

12. Verfahren nach Anspruch 1 bis 9 oder Anspruch 11,
**dadurch gekennzeichnet,**
**dass** zwischen dem Eingang und dem Ausgang der Trennkapillare (1) der Temperaturgradient durch Variation der Strömungsgeschwindigkeiten des Kühlfluids während der rampenförmigen Steigerung des Temperaturverlaufes angepasst wird.

13. Vorrichtung zur gaschromatischen Trennung und Bestimmung von flüchtigen Stoffen in einem Trägergas, aufweisend eine widerstandsheizbare Trennkapillare (1) und/oder eine die Trennkapillare (1) umgebende widerstandsheizbare Hüllkapillare (2) in einem Hohlzylinder (15) mit einer umfangsverteilten, schraubenförmigen Nut (3), wobei innerhalb des Hohlzylinders (15) poröses Material (8) so angeordnet ist, dass durch das Einblasen eines Fluids radial zu der Trennkapillare (1) und/oder Hüllkapillare (2) aus einer internen Einheit zur Erzeugung einer Fluidströmung ein kontinuierlicher Temperaturverlauf in Form eines Gradienten entlang der Trennkapillare (1) erzeugt wird.

**14.** Vorrichtung nach Anspruch 13,
**dadurch gekennzeichnet,**
**dass** die interne Einheit zur Erzeugung einer Fluidströmung einen Lüfter oder Gebläse (6) und einen Temperatursensor umfasst.

**15.** Vorrichtung nach Anspruch 13 oder 14,
**dadurch gekennzeichnet, dass** die Trennkapillare (1) 100 bis 500 cm lang, einen Durchmesser im Bereich von 0,3 mm bis 1 mm aufweist und die Trennkapillare (1) aus einem Festkörper, insbesondere aus einem Metall oder einer Keramik besteht.

**Claims**

**1.** A method for the gas-chromatic separation and determination of volatile substances in a carrier gas by means of a chromatographic separation capillary (1), wherein the separation capillary (1) and/or a sheath capillary (2) surrounding the separation capillary (1) is electrically conductive and is heated with current in the form of resistance heating and is/are cooled by a forced convective flow by means of a fluid,
**characterized**
**in that** the separation capillary (1) and/or the sheath capillary (2) is are subject to a radial incident flow and a continuous temperature variation in the form of a gradient along the separation capillary (1) and/or sheath capillary (2) is produced by a continuous change in the speed of flow of the cooling fluid streaming in the separation capillary (1) and/or the sheath capillary (2).

**2.** The method as claimed in claim 1,
**characterized**
**in that** the gradient is produced by continuous widening of a flow channel around the separation capillary (1) and/or sheath capillary (2).

**3.** The method as claimed in claim 1,
**characterized**
**in that** the gradient is produced by continuous discharge of flow fractions of the cooling fluid radial along the separation capillary (1) and/or the sheath capillary (2) via a partially permeable wall.

**4.** The method as claimed in claim 1,
**characterized**
**in that** the gradient is produced by radial incident flow of a cooling fluid along the separation capillary (1) and/or the sheath capillary (2) by continuous widening of the flow resistance along a helical groove (3) in a hollow body (15) comprising a porous material (8) which produces a pressure loss.

**5.** The method as claimed in one of the preceding claims,
**characterized**
**in that** a ramp-shaped increase in the temperature variation with holding phases is implemented.

**6.** The method as claimed in one of the preceding claims,
**characterized**
**in that** the volatile substances are passed into the separation capillary (1), wherein a temperature level at the inlet of the separation capillary (1) is higher than at the outlet, and the substances introduced leave the separation capillary (1) in the direction of a detector (4) by virtue of time-controlled raising of the temperature level.

**7.** The method as claimed in one of the preceding claims,
**characterized**
**in that** an enrichment of the volatile substances takes place in zones of the separation capillary (1) which are at a temperature level at which said volatile substances are transported slowly or not at all in the carrier gas.

8. The method as claimed in one of the preceding claims, **characterized** **in that** the volatile substances are concentrated along the separation capillary (1) and reach the detector (4) at different times through the temperature level being raised.

9. The method as claimed in one of the preceding claims, **characterized** **in that** the fluid for cooling the separation capillary (1) is pre-cooled to a temperature range of from 0°C to -196°C, more particularly using nitrogen.

10. The method as claimed claims 1 to 4 and claims 6 to 9,

    **characterized** **in that** the separation of the volatile substances is accomplished by continuously raising the temperature level.

11. The method as claimed in one of the preceding claims, **characterized** **in that** the separation of the volatile substances is performed for use in drug and doping analysis or in explosives and hazardous materials detection.

12. The method as claimed in claims 1 to 9 oder claim 11, **characterized** **in that** the temperature gradient between the inlet and the outlet of the separation capillary (1) is adapted by varying the speeds of flow of the cooling fluid during the ramp-shaped increase in the temperature variation.

13. A device for gas-chromatic separation and determination of volatile substances in a carrier gas, having a resistance-heatable separation capillary (1) and/or a sheath capillary (2) surrounding the separation capillary (1) in a hollow cylinder (15) having a helical groove (3) distributed around the circumference, wherein porous material (8) is arranged within the hollow cylinder (15) in such a way that, by blowing in a fluid radially in direction to the separation capillary (1) and/or sheath capillary (2) from an internal unit for producing a fluid flow, a continuous temperature variation in the form of a gradient along the separation capillary (1) is produced.

14. The device as claimed in claim 13, **characterized** **in that** that the internal unit for producing a fluid flow comprises a fan or a blower (6) and a temperature sensor.

15. The device as claimed in one of the preceding claims, **characterized** **in that** the separation capillary (1) has a diameter in a range of from 0.3 mm to 1 mm over a length of from 100 to 500 cm, and the separation capillary (1) comprises a solid body, in particular a metal or a ceramic.

**Revendications**

1. Procédé de séparation et de détermination par chromatographie gazeuse de substances volatiles dans un gaz porteur à travers un capillaire de séparation chromatographique (1), le capillaire de séparation (1) et/ou un capillaire d'enveloppe (2) entourant le capillaire de séparation (1) étant électriquement conducteur et chauffé par un courant sous la forme d'un chauffage par résistance et refroidi au moyen d'un fluide par écoulement convectif forcé, **caractérisé en ce que**

    le capillaire de séparation (1) et/ou le capillaire d'enveloppe (2) est alimenté par afflux radial et un profil de température continu se présentant sous la forme d'un gradient le long du capillaire de séparation (1) et/ou du capillaire d'enveloppe (2) est généré par variation continue de la vitesse d'écoulement radial du fluide de refroidissement le long du capillaire de séparation (1) et/ou du capillaire d'enveloppe (2).

2. Procédé selon la revendication 1, **caractérisé en ce que** le gradient est généré par élargissement continu d'un conduit d'écoulement autour du capillaire de séparation (1) et/ou du capillaire d'enveloppe (2).

**3.** Procédé selon la revendication 1, **caractérisé en ce que** le gradient est généré par dérivation continue de fractions d'écoulement du fluide de refroidissement radialement le long du capillaire de séparation (1) et/ou du capillaire d'enveloppe (2) par le biais d'une paroi partiellement perméable.

**4.** Procédé selon la revendication 1, **caractérisé en ce que** le gradient est généré par afflux radial d'un fluide de refroidissement le long du capillaire de séparation (1) et/ou du capillaire d'enveloppe (2) produit par augmentation continue de la résistance à l'écoulement le long d'une rainure hélicoïdale (3) ménagée dans un corps creux (15) comportant un matériau poreux (8) générant des pertes de pression.

**5.** Procédé selon l'une des revendications précédentes, **caractérisé en ce qu'**une augmentation en forme de rampe du profil de température est effectuée avec des phases d'arrêt.

**6.** Procédé selon l'une des revendications précédentes, **caractérisé en ce que** les substances volatiles sont introduites dans le capillaire de séparation (1), un niveau de température en entrée du capillaire de séparation (1) étant supérieur à celui en sortie et les substances introduites quittent le capillaire de séparation (1) en direction d'un détecteur (4) par élévation commandée dans le temps du niveau de température.

**7.** Procédé selon l'une des revendications précédentes, **caractérisé en ce qu'**une accumulation des substances volatiles est effectuée dans les zones du capillaire de séparation (1), lesquelles se trouvent à un niveau de température auquel ces substances volatiles ne sont pas transportées, le sont lentement, dans le gaz porteur.

**8.** Procédé selon l'une des revendications précédentes, **caractérisé en ce que** les substances volatiles parviennent de façon concentrée le long du capillaire de séparation (1) et de façon décalée dans le temps par rapport au détecteur (4), par élévation du niveau de température.

**9.** Procédé selon l'une des revendications précédentes, **caractérisé en ce que** le fluide de refroidissement du capillaire de séparation (1) est préalablement refroidi à une gamme de températures comprise entre 0 °C et -196 °C, en particulier avec de l'azote.

**10.** Procédé selon les revendications 1 à 4 et les revendications 6 à 9, **caractérisé en ce que** la séparation des substances volatiles est effectuée par élévation continue du niveau de température.

**11.** Procédé selon l'une des revendications précédentes, **caractérisé en ce que** la séparation des substances volatiles est effectuée en vue d'une utilisation dans l'analyse de drogues et de produits dopants ou dans la détection d'explosifs et de substances dangereuses.

**12.** Procédé selon les revendications 1 à 9 ou la revendication 11, **caractérisé en ce que** le gradient de température est ajusté entre l'entrée et la sortie du capillaire de séparation (1) par variation des vitesses d'écoulement du fluide de refroidissement pendant l'augmentation en forme de rampe du profil de température.

**13.** Dispositif de séparation et de détermination de substances volatiles par chromatographie gazeuse dans un gaz porteur, le dispositif comprenant un capillaire de séparation (1) pouvant être chauffé par résistance et/ou un capillaire d'enveloppe (2), pouvant être chauffé par résistance et entourant le capillaire de séparation (1), dans un cylindre creux (15) comportant une rainure hélicoïdale (3) s'étendant sur la circonférence, un matériau poreux (8) étant disposé dans le cylindre creux (15) de telle sorte qu'un profil de température continu, qui se présente sous la forme d'un gradient le long du capillaire de séparation (1), étant généré par soufflage d'un fluide radialement au capillaire de séparation (1) et/ou au capillaire d'enveloppe (2) en sortie d'une unité interne destinée à générer un écoulement de fluide.

**14.** Appareil selon la revendication 13, **caractérisé en ce que**, pour générer un écoulement de fluide, l'unité interne comprend un ventilateur ou une soufflante (6) et un capteur de température.

**15.** Dispositif selon la revendication 13 ou 14, **caractérisé en ce que** le capillaire de séparation (1) de 100 à 500 cm de long a un diamètre dans la gamme de 0,3 mm à 1 mm et le capillaire de séparation (1) est en une matière solide, en particulier en métal ou en céramique.

Figur 1

Figur 2

Figur 3

Figur 4

Figur 5

Figur 6

Figur 7

Figur 8

Berechnung der theoretischen Temperatur der Wand einer geheizten Kapillare,
Durchmesser 1 mm, bei Anströmung mit Luft von 20°C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3146616 A
- DE 2149508
- US 5028243 A
- US 5215556 A
- US 5929321 A
- US 7914612 B2
- US 20120085148 A1
- US 5114439 A
- US 5135549 A
- US 5808178 A

**In der Beschreibung aufgeführte Nicht-Patentliteratur**

- **PHILLIPS, J. B. ; JAIN, V.** On-column temperature programming in gas-chromatography using temperature-gradients along the capillary column. *JOURNAL OF CHROMATOGRAPHIC SCIENCE,* 1995, vol. 33 (10), 541-550
- **COUDERT, M. ; VERGNAUD, J. M.** Retention in gas chromatography obtained with a longitudinal temperature gradient with a constant growth rate. *JOURNAL OF CHROMATOGRAPHY,* 1971, vol. A 54 (1), 1-8
- **CONTRERAS, JESSE A. ; ROCKWOOD, ALAN L. ; TOLLEY, H. DENNIS ; LEE, MILTON L.** Peak sweeping and gating using thermal gradient gas chromatography. *JOURNAL OF CHROMATOGRAPHY,* 2013, vol. A 1278, 160-165
- **BAEHR, HANS DIETER ; STEPHAN, KARL.** Wärme- und Stoffübertragung. Springer, 2006